# EUROPEAN PATENT APPLICATION

(11) **EP 4 748 525 A1**
(43) Date of publication of application: **27.05.2026**
(21) Application number: 24214669.4
(22) Date of filing: 22.11.2024
(51) Int. Cl.: B23D 49/16, B23D 51/16

(54) **RECIPROCATING SAW**

(71) Applicant: Hilti Aktiengesellschaft, 9494 Schaan (LI)
(72) Inventor: Haas, Günter, 73635 Rudersberg (DE); Lein, Claudius, 86899 Landsberg am Lech (DE)
(74) Representative: Hilti Aktiengesellschaft Corporate Intellectual Property

(57) **Abstract**

A reciprocating saw, having a housing, a motor, a slider, a support body, a reciprocation conversion mechanism and an orbital mechanism, wherein the support body is supported in the housing. The orbital mechanism comprises a cam part which is able to contact the support body directly or indirectly in the up-down direction. An elastic component is provided to create an action force which can cushion the user force applied by the user in downward direction and reduce the cutting force sustained by the blade during the direct or indirect contact of cam part and the support body. The elastic component can change the path of orbital motion of the saw blade, thereby increasing the cutting efficiency and reducing saw blade wear.

## Description

### TECHNICAL FIELD

The present invention relates to a cutting tool, in particular to a reciprocating saw in which a saw blade is capable of reciprocation.

### BACKGROUND ART

Reciprocating saws are widely used in cutting applications, generally converting motor torque to linear reciprocation of a saw blade by means of a transmission mechanism, so as to realize cutting. Furthermore, some reciprocating saws are equipped with an orbital cutting function, to increase cutting performance. Depending on the mechanical design of the drive units, this function can make the saw blade move orbitally in a specific way, generally speaking the blade path between cutting stroke and non-cutting stroke is different. The orbital motion will result in the saw blade applying a larger force to the workpiece, so that each saw tooth of the saw blade produces larger chips, and thus cuts the workpiece faster. However, in the case of metal, this will also increase saw blade wear, due to the high peak force on the saw teeth. Thus, it is desirable to dampen to a certain degree the upward reaction force applied to the saw blade by the tool being machined when the reciprocating saw is performing orbital cutting.

US11554410 B has disclosed a reciprocating saw, having a first biasing member 71 disposed between a support body 13 and a housing, so as to apply force to a slider by means of the support body. In a first action mode, because the biasing member 71 applies force to the support body 13 in such a direction as to cause a saw blade 2 to oscillate downwards, jumping of the saw blade 2 can be effectively suppressed. However, the so-called first action mode of the reciprocating saw disclosed in that patent means that when the saw blade is moving in a partially orbital manner, the biasing member 71 has a preloading effect, preventing possible upward jumping of the saw blade due to a reaction; the reaction force from the workpiece which the saw blade sustains due to downward pressure applied by the user cannot be dampened throughout the orbital motion.

### SUMMARY OF THE INVENTION

An objective of the present invention is to provide a reciprocating saw, which is capable of changing a movement path of an orbital mechanism, and thereby damping a reaction force exerted on a saw blade during cutting, to increase cutting efficiency while reducing saw blade wear.

A reciprocating saw, having a housing, a motor, a slider, a support body, a reciprocation conversion mechanism and an orbital mechanism, wherein the support body is supported in the housing, and when a direction of extension of the slider is a front-rear direction, the reciprocation conversion mechanism converts rotation of the motor to reciprocation of the slider in the front-rear direction. The slider is supported by the support body and is able to reciprocate in the support body, and a front end of the slider has a saw blade mounting part for mounting a saw blade. As the slider reciprocates in the support body, the orbital mechanism causes the saw blade mounting part to move back and forth on different paths. The orbital mechanism comprises a cam part which is able to contact the support body directly or indirectly in the up-down direction. An elastic component is provided to create an action force which can cushion the user force applied by the user in downward direction and reduce the cutting force sustained by the blade during the direct or indirect contact of cam part and the support body. The orbital motion of the saw blade mounting part is performed by means of the contact between the cam part and the support body. The elastic component can change the path of orbital motion of the saw blade, thereby increasing the cutting efficiency and reducing saw blade wear.

According to one embodiment of the present invention, the support body is an elongated component substantially extending in the front-rear direction, a first bearing and a second bearing arranged coaxially are respectively fixed at front and rear ends thereof, the slider is inserted coaxially through the first bearing and the second bearing, an outer ring of the second bearing is disposed above the cam part, and the support body contacts the cam part directly or indirectly via the second bearing. The conversion mechanism comprises a disc-shaped bevel gear extending forwards, rearwards, leftwards and rightwards, and has an eccentric pin in the up-down direction connected to the slider, the cam part is configured to be annular or arc-shaped on an upper surface or lower surface of the bevel gear when viewed from above or below, and the thickness of the cam part in the up-down direction varies in the circumferential direction. Such a cam part realizes orbital motion of the saw blade in a simple and rational way. Thus, while the slider is supported by the support body and able to reciprocate linearly in the support body, the support body also oscillates in the up-down direction at the second bearing side, thereby realizing substantially elliptical orbital motion of the saw blade. Moreover, due to the damping action of the elastic component, the substantially elliptical path of the saw blade is changed, moving backward and forward on different paths, helping to increase the cutting efficiency.

According to a preferred embodiment of the present invention, the elastic component is disposed on the outer ring of the second bearing and/or the cam part. Here, the cam part and the support body are in indirect contact via the elastic component, so when the user applies a downward force F_{_user}, the elastic component provides damping force F_{_reaction} throughout the orbital motion, such that the cutting force F_{_cut} sustained by the saw blade from the workpiece is reduced, thereby reducing saw blade wear.

According to the other preferred embodiment of the present invention, the elastic component is disposed between an inner ring of the second bearing and the support body. Thus, the cam part is in direct contact with the support body, the damping action F_{_reaction} of the elastic component takes place between the support body and the second bearing, likewise changing the path of the saw blade in orbital motion, and the cutting force F_{_cut} exerted on the saw blade from the workpiece is reduced, thereby reducing wear to the saw blade.

According to another preferred embodiment of the present invention, the cam part is at least partly formed of an elastic material. Thus, there is no need for an additional elastic component; the cam part itself, formed of elastic material, can provide damping during orbital motion.

According to another yet preferred embodiment of the present invention, the elastic component is disposed between bevel gear and the housing. Therefore, the elastic component can also provide a damping force F_{_reaction} throughout the orbital motion, when the user applies a downward force F_{_user} on the housing.

According to the other embodiment of the present invention, the support body is an elongated component substantially extending in the front-rear direction, a pair of rolling bearings is disposed at a front end thereof, an opening for accommodating the slider is provided at a rear end, and the front end of the slider passes between the pair of rolling bearings. Thus, the slider is supported by the support body and can reciprocate linearly in the support body.

The reciprocation conversion mechanism comprises a disc-shaped bevel gear extending forwards, rearwards, upwards and downwards, and has an eccentric pin in a left-right direction connected to the slider. The cam part is configured to be annular or disc-shaped on a left surface or right surface of the bevel gear when viewed from the left or right, and is disposed on the bevel gear eccentrically, a bushing ring is provided on a peripheral edge of the cam part, and a rear end of the support body is connected to the bushing ring by means of a control rod. When the bevel gear rotates about the rotation axis, the eccentrically disposed cam part also rotates therewith; a top part of the bushing ring thereby realizes motion in the up-down direction, and transmits this up-down motion to the rear end of the support body by means of the control rod.

The control rod and/or the bushing ring is at least partly form of elastic material and configured to be the elastic component. Thus, the control rod and/or bushing ring acting as an elastic component changes the shape of the substantially elliptical (orbital) path formed by the orbital mechanism, and can realize a damping function during force transmission, thereby reducing wear to the saw blade, while also reducing vibration produced by the peak value of force.

Alternatively, a separated elastic component is provided between the control rod and the bushing ring, to provide the cushion force in the orbital movements of the saw blade.

An upper part of the bushing ring is provided with an interface, and an end of the control rod is received in the interface. Thus, the connection between the orbital mechanism and the support body is achieved in a simple manner.

The elastic component may be a spring, or rubber, or a synthetic resin having elasticity.

### BRIEF DESCRIPTION OF THE DRAWINGS

- Fig. 1: is a sectional view of a reciprocating saw according to an embodiment of the present invention.
- Fig. 2: is a partial enlarged schematic drawing of a preferred implementation of the reciprocating saw in the embodiment shown in Fig. 1.
- Fig. 3: is another partial enlarged schematic drawing of the preferred implementation of the reciprocating saw in the embodiment shown in Fig. 1.
- Fig. 4: is a simplified schematic drawing of a reciprocating saw in another embodiment of the present invention.
- Fig. 5: is a simplified schematic partial sectional view of a variant embodiment reciprocating saw shown in Fig. 4.
- Fig. 6: is a simplified schematic partial sectional view of the other variant embodiment reciprocating saw shown in Fig. 4.
- Fig. 7: is a simplified schematic partial sectional view of another variant embodiment reciprocating saw shown in Fig. 4.
- Fig. 8: is a simplified schematic partial sectional view of another yet variant embodiment reciprocating saw shown in Fig. 4.

### DETAILED DESCRIPTION OF THE INVENTION

The present invention will now be described more comprehensively below with reference to the drawings, which show preferred embodiments of the present invention. However, the present invention may be embodied in many different forms herein; on the contrary, these embodiments are provided in order to make the present disclosure full and complete, and comprehensively convey the scope of the invention to those skilled in the art. In the drawings, identical reference signs denote identical components.

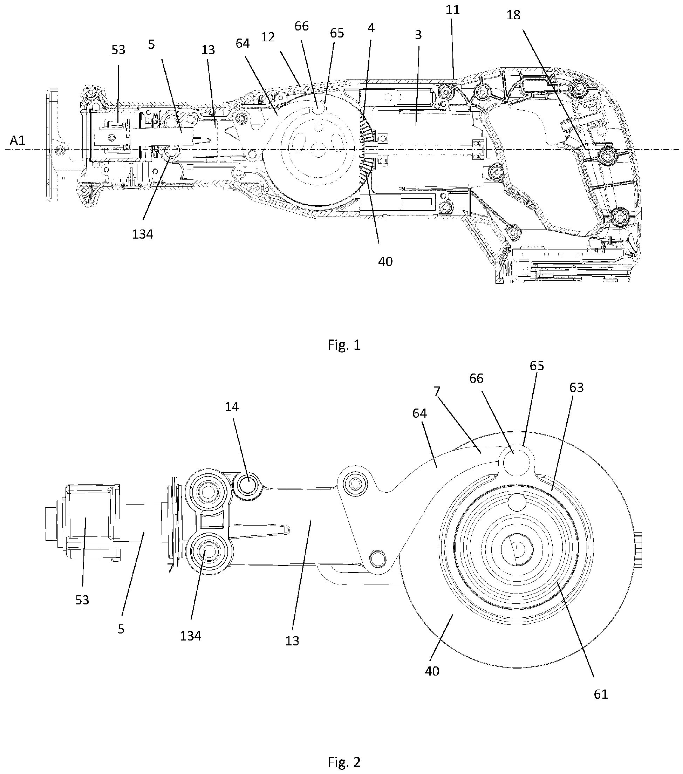

Figs. 1 - 3 show a reciprocating saw 1 according to an embodiment of the present invention. The reciprocating saw 1 is configured so as to be able to cut a workpiece (wood, plastic material, steel, etc.) by causing a detachably mounted saw blade 2 in the form of a thin plate to reciprocate. In addition, the reciprocating saw may also be called a saber saw.

As shown in Fig. 1, a profile of the reciprocating saw 1 is formed mainly of a main housing 11 and a handle 18. The main housing 11 is an elongated hollow body. The main housing 11 has a long axis A1. The main housing 11 houses a motor 3, a slider 5, a reciprocation conversion mechanism 4 and an orbital mechanism 6, etc., wherein a front end of the slider 5 is provided with a saw blade mounting part 53 for mounting a saw blade, and the reciprocation conversion mechanism 4 converts rotation of the motor 3 to reciprocation of the slider 5. In the description below, for convenience, the direction of extension of the long axis A1 of the main housing 11 is specified as the front-rear direction of the reciprocating saw 1. In the front-rear direction, the side where the saw blade is mounted is specified as the front side of the reciprocating saw 1, and the opposite side (the handle 18 side) is specified as the rear side. The direction that is perpendicular to the long axis A1 and substantially parallel to a plate face of the saw blade 2 mounted on the slider 5 is specified as the up-down direction of the reciprocating saw 1. In the up-down direction, the direction in which saw teeth of the saw blade 2 point during normal use is specified as the downward direction, and the direction opposite to this downward direction is specified as the upward direction. Furthermore, the direction that is perpendicular to both the front-rear direction and the up-down direction is specified as the left-right direction of the reciprocating saw 1.

The detailed structure of the reciprocating saw 1 is described below. As shown in Fig. 1, the interior of the main housing 11 mainly houses the motor 3, the reciprocation conversion mechanism 4, the orbital mechanism 6, a support body 13 and the slider 5. The motor 3 is housed in a rear end of the main housing 11. The motor in this embodiment is a brushless DC motor. The motor 3 has an output shaft, a rotation axis of the output shaft extending parallel to the long axis A1 of the main housing 11 (i.e. in the front-rear direction). A pinion is provided at a front end of the motor output shaft.

In this embodiment, the reciprocation conversion mechanism 4 and the slider 5 are housed at the front side of the motor 3 in the main housing 11. In addition, in this embodiment, the reciprocation conversion mechanism 4 and the slider 5 are housed in a gear housing 12. Additionally, the gear housing 12 is held in the main housing 11 in a fixed state. Thus, the gear housing 12 may also be understood as being a single housing integrated with the main housing 11. The gear housing 12 is an elongated hollow body overall, and the slider 5 is supported by the support body 13 in the gear housing 12.

The reciprocation conversion mechanism 4 transmits rotational motive power of the motor output shaft to the slider 5, converting it to linear reciprocation, driving the slider 5, along the long axis A1. In an exemplary embodiment as shown in Fig. 1, the reciprocation conversion mechanism 4 in this embodiment comprises a bevel gear 40. The bevel gear 42 is disposed at the left or right side of the motor output shaft, and meshes with the pinion. A rotation axis A3 of the bevel gear 40 extends in the left-right direction. An eccentric pin (not shown) extends in the left-right direction and is fixed to the side of the bevel gear 40 at a position eccentric with respect to the rotation axis A3. The slider 5 is connected to the eccentric pin at its rear end.

In this embodiment, the support body 13 is an elongated component extending substantially in the front-rear direction, supported in such a way as to extend substantially in the front-rear direction in the gear housing 12. Furthermore, the support body 13 is connected to the gear housing 12 by means of a pin 14, and the support body 13 is able to oscillate in the up-down direction about the axis of the pin 14, with the pin 14 as a fulcrum. The support body 13 is provided with a pair of rolling bearings 134 at the front end thereof, while the rear end is provided with an opening (not shown) which accommodates the slider 5, and the front end of the slider 5 passes between the pair of rolling bearings 134. Thus, the slider 5 is supported by the support body 13 and can reciprocate linearly in the support body 13.

The reciprocating saw 1 has an orbital motion mode, i.e. an action mode in which the saw blade 2 is caused to move back and forth on different paths by causing the slider 5 to oscillate in the up-down direction while reciprocating linearly in the front-rear direction.

The orbital mechanism 6 is a mechanism configured to cause the support body 13 to oscillate in the up-down direction as the slider 5 moves in the front-rear direction.

In this embodiment, the orbital mechanism 6 comprises a cam part 61 and a bushing 63. The cam part 61 is disposed eccentrically on its back side of the bevel gear 40 that faces away from the eccentric pin, and is configured to be annular or disc-shaped when viewed from the left or right. The bushing ring 63 is provided on a peripheral edge of the cam part 61, and the rear end of the support body 13 is connected to the bushing ring 63 by means of a control rod 64. When the bevel gear 40 rotates about the rotation axis A3, the eccentrically disposed cam part 61 also rotates therewith; a top part of the bushing ring 63 thereby realizes motion in the up-down direction, and transmits this up-down motion to the rear end of the support body 13 by means of the control rod 64. Preferably, an upper part of the bushing ring 63 is provided with an interface 65, and an end 66 of the control rod is received in the interface 65. Thus, the connection between the orbital mechanism and the support body is achieved in a simple manner.

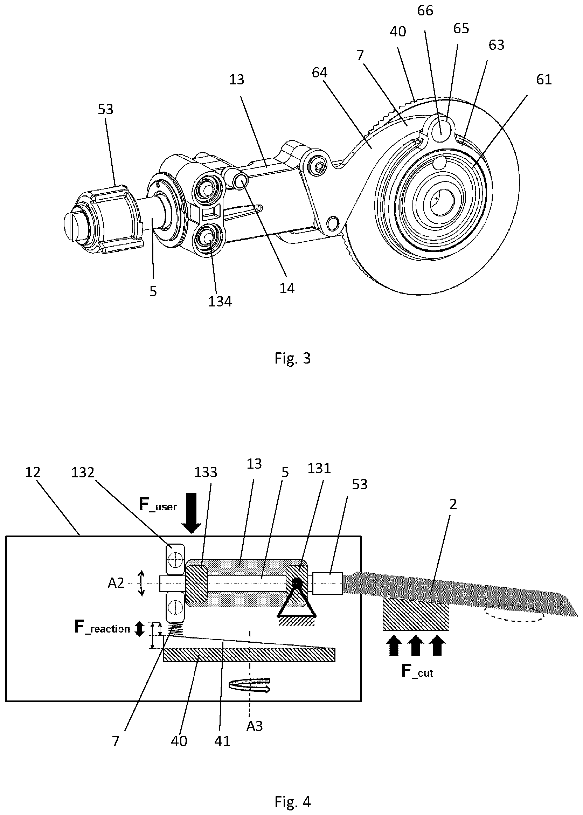

The control rod 64 and/or the bushing ring 63 is at least partly an elastic component 7. For example, referring to Figs. 2 and 3, the side of the control rod 64 that is connected to the support body is substantially at the same height as the support body, and connected to upper and lower regions of the support body by means of two fasteners; and the control rod extends from a lower region at this side to the end connected to the bushing ring. Preferably, the control rod 64 has an inner cut at the side connected to the support body, and gradually tapers in the extension direction. More preferably, a portion between two ends of the control rod forms an arc shape, so as to have higher flexibility. The control rod 64 is formed of an elastic material at least at the side connected to the bushing ring. That is to say, the control rod 64 at least partly acts as an elastic component 7. Of course, the control rod 64 may also act as an elastic component 7 in its entirety. The control rod and/or bushing ring acting as an elastic component changes the shape of the substantially elliptical (orbital) path formed by the orbital mechanism, and can realize a damping function during force transmission, thereby reducing wear to the saw blade, while also reducing vibration produced by the peak value of force.

Alternatively, the control rod 64 is connected to the bushing ring 63 by means of an independent elastic component 7.

It can be understood that the type, quantity and configuration, etc. of the elastic component 7 should be set according to the structure and parameters of the reciprocating saw, and can be changed appropriately. For example, Figs. 2 and 3 schematically shows changes in the orbital motion of the saw blade 2 for control rods 64 (elastic components 7) formed of elastic materials with different hardnesses in this embodiment. The lower the hardness of the elastic component 7, the more significant the deviation of orbital motion from the original elliptical path. For example, at the minimum hardness, it can be seen that the extent of orbital motion in the up-down direction is obviously increased, therefore the cutting depth of the saw blade is increased, thereby increasing the cutting efficiency. In comparison, at the maximum hardness of the elastic component 7, the contour of the orbital motion does not change significantly, but the angle of inclination with respect to the direction of reciprocation becomes obvious; this will cause the direction in which the saw teeth of the saw blade cut into the workpiece to change accordingly, pointing more directly towards the tips of the saw teeth, and thereby making the cutting process easier and more efficient.

Now, referring to figs. 4-8, the other embodiments of the present invention are shown. The reciprocation conversion mechanism 4 comprises a bevel gear 40. A rotation axis A3 of the bevel gear 40 extends in the up-down direction. The bevel gear 40 has a disc shape when viewed from above. An eccentric pin (not shown) is fixed to the upper side of bevel gear 40 at a position eccentric with respect to the rotation axis A3. The slider 5 is connected to the eccentric pin.

In these embodiments, the support body 13 is an elongated component, supported in such a way as to extend substantially in the front-rear direction in the gear housing 12. A first bearing 131 and a second bearing 132 are fixed at a front end and a rear end of the support body 13, respectively. The first bearing 131 and second bearing 132 are disposed coaxially, with axes of the first bearing 131 and second bearing 132 specifying a long axis of the support body 13. The slider 5 is inserted through the first bearing 131 and second bearing 132 coaxially, and is supported by the first bearing 131 and second bearing 132 in such a way as to be slidable along the long axis of the support body 13. That is, the long axis of the support body 13 specifies a drive axis A2 of the slider 5. Furthermore, the support body 13 is supported in such a way as to be able to oscillate in the up-down direction relative to the gear housing 12. More specifically, the support body 13 is connected to the gear housing 12 by means of a pin (not shown).

The first bearing 131 is a sliding bearing fitted round the front end of the slider 5, and the second bearing 132 is a rolling bearing. A third bearing 133 may also be fitted to the rear end of the slider 5, and the third bearing 133 may also be a sliding bearing. Thus, an inner ring of the second bearing 132 can be pressed into and fixed to the third bearing 133. Alternatively, the inner ring of the second bearing 132 is directly pressed into and fixed to the rear end of the support body, and not mounted on an outer periphery of the third bearing 133. In summary, an outer ring of the second bearing 132 is rotatable about the drive axis A2 relative to the support body 13.

The slider 5, is generally an elongated component extending in linear form substantially in the front-rear direction. The main body of the slider 5 is supported by the first bearing 131 and second bearing 132 of the support body 13. The slider 5 comprises a saw blade mounting part 53 at its front end. A base end of the saw blade 2 is detachably mounted on the saw blade mounting part 53. As the slider 5 is connected to the eccentric pin, when the bevel gear 40 rotates around the rotation axis A3, the eccentric pin moves in a circle centred at the rotation axis A3, thus, the slider 5 reciprocates substantially in the front-rear direction along the drive axis A2 relative to the support body 13.

In the embodiments shown in Figs. 4-8, the orbital mechanism 6 comprises the cam part 61 and a biasing member 62. The cam part 61 is disposed on the upper side of the bevel gear 40. The cam part 61 is a circularly annular part, disposed along an outer edge of the upper surface of bevel gear 40 in such a way as to protrude upwards from the upper surface of the bevel gear 40. The amount by which the cam part 61 protrudes from the upper surface of the bevel gear 40 (i.e. the thickness of the cam part 61 in the up-down direction) varies in the circumferential direction. More specifically, as shown in Fig. 3, an upper end face (cam face) of the cam part 61 is configured to be inclined forwards relative to an imaginary plane perpendicular to the rotation axis A3, when the thickest portion of the cam part 61 is located at the rearmost position. The cam part 61 can contact the support body 13 directly or indirectly in the up-down direction, and this contact between the cam part 61 and the support body 13 causes the saw blade 2 to move orbitally.

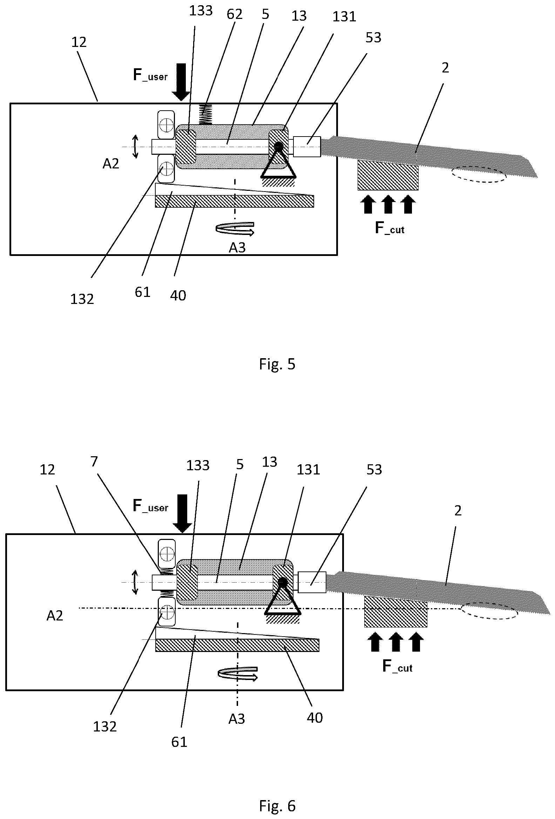

As shown in fig. 5, the biasing member 62 is disposed between an upper wall of the gear housing 12 and an upper wall of the support body 13. In the figs. 4, and 6-8, the biasing member is not shown, but the biasing member 62 in these variants of embodiments is configured same to that shown in fig. 5. In these embodiments, the biasing member 62 is a compression coil spring. The biasing member 62 is disposed in a compressed state between a rear end of the gear housing 12 and the rear end of the support body 13, and continuously applies a downward force to the rear end of the support body 13 relative to the main housing 11 (the gear housing 12). The rear end of the support body 13 has a force applied to it by the biasing member 62 in a downward direction (i.e. a direction in which the second bearing 132 approaches the cam part 61), so the second bearing 132 will remain in a state of abutting the cam part 61 of the bevel gear 40 from above. In addition, although a detailed illustration has been omitted, there may be more than one biasing member 62, for example two or more.

When the motor 3 is driven with the second bearing 132 in abutment with the cam part 61, the second bearing 132 rotates and moves on the upper end face (cam face) of the cam part 61 as the bevel gear 40 rotates. The thickness of the portion of the cam part 61 in abutment with the second bearing 132 varies as the bevel gear 40 rotates. Thus, the second bearing 132 moves in the up-down direction. By means of this structure, the support body 13 is able to oscillate in the up-down direction according to the rotation of the bevel gear 40. The saw blade 2 moves orbitally, specifically by oscillating upwards while moving forwards and oscillating downwards while moving backwards.

An elastic component 7 is provided between the orbital mechanism 6 and the support body 13. Referring to Fig. 4, according to a preferred embodiment of the present invention, the elastic component 7 is disposed on the outer ring of the second bearing 133 and/or the cam part 61. For example, the elastic component 7 may be an elastic material disposed around a peripheral wall of the outer ring of the second bearing 133, e.g. rubber or another deformable composite material. The elastic component 7 may also be a spring or elastic material disposed on an upper surface of the cam part 61. Here, the cam part 61 and the support body 13 are in indirect contact via the elastic component 7. When the user applies a downward force F_{_user}, the elastic component 7 provides damping force F_{_reaction} during the orbital motion, such that the substantially elliptical motion path of the saw blade is changed, helping to increase the cutting efficiency. Furthermore, due to the damping force F_{_reaction} of the elastic component 7, the cutting force F_{_cut} sustained by the saw blade 2 from the workpiece is reduced, thereby reducing wear to the saw blade 2.

Referring to Fig. 6, according to another preferred embodiment of the present invention, the elastic component 7 is disposed between the inner ring of the second bearing 133 and the support body 13. Thus, the cam part 61 is in direct contact with the support body 13, the damping action of the elastic component 7 takes place between the support body 13 and the second bearing 133, likewise changing the path of the saw blade 2 in orbital motion, and the cutting force F_{_cut} sustained by the saw blade 2 from the workpiece is reduced, thereby reducing wear to the saw blade.

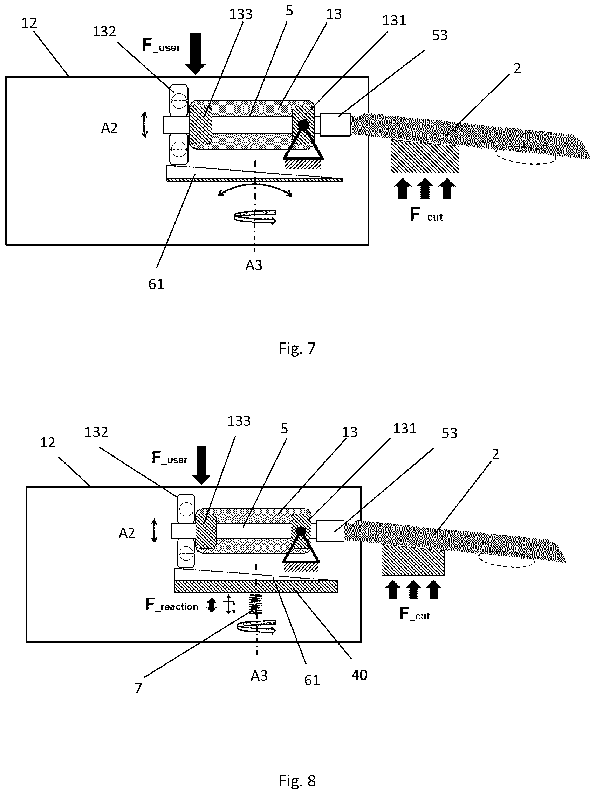

Alternatively, as shown in fig. 7, the cam part 61 is at least partly formed of an elastic material. Thus, there is no need for an additional elastic component; the cam part 61 itself, formed of elastic material, can provide damping during orbital motion as an elastic component.

Referring to Fig. 8, according to another yet preferred embodiment of the present invention, the elastic component 7 is disposed below the cam part 61, in particular, below the bevel gear 40. Thus, the cam part 61 is in direct contact with the support body 13, the damping Force F_{_reaction} of the elastic component 7 takes place between gear housing 12 and cam part 61, likewise changing the path of the saw blade 2 in orbital motion, and the cutting force F_{_cut} sustained by the saw blade 2 from the workpiece is reduced, thereby reducing wear to the saw blade.

The type, quantity and configuration, etc. of the elastic component 7 should be set according to parameters and conditions of use of the reciprocating saw, and can be changed appropriately. For example, elastic components 7 include but are not limited to springs (e.g. a compression coil spring, a tension coil spring, a leaf spring, a torsion spring), rubber, synthetic resins having elasticity (e.g. a polyurethane foam), and elastic bodies formed of felt, etc. Only one elastic component 7 may be provided, or more than one may be provided. Optionally, the elastic component 7 may be deformable in its entirety, or may be a locally deformable element or material.

The orbital motion of the saw blade 2 is driven by the orbital mechanism 6, and the elastic component 7 disposed between the orbital mechanism 6 and the support body 13 will affect the movement of the support body 13. A deformable contact area will influence the movement of housing depending on force of user F_{_user} plus force F_{_cut} at saw blade and the stiffness of deformable part and will also damp force peaks from cutting process. If the deformable part has a stop area for deformation (e.g. blocked like a completely compressed spring), then the more the user presses the tool against the workpiece, the more the saw blade will follow the original orbital motion. When pressing hard also the hard force peaks coming from cutting process are not so much damped and lead to an earlier wear of saw blade. There is a "sweep spot" where you can press hard enough to get a good cutting speed, but also get a damped cutting force at sawblade.

In these variants of the other embodiments as shown in Figs 4-8, the motor housing, handle, and motors are omitted from the drawings. Also the conversion mechanism 4 and orbital mechanism 6 have been simplified. It has been well known that the detailed structures of the reciprocation conversion mechanism 4 and how it connected to the slider 5 and drive the slider 5 to reciprocate in front and rear direction. For example, the conversion mechanism 4 could comprise an intermediate shaft, a bevel gear and a crank plate. The intermediate shaft is disposed in a lower end of the main housing 11 (the gear housing 12) at a position in front of a front end of a motor shaft. The intermediate shaft is rotatably supported by two bearings. A rotation axis of the intermediate shaft extends in the up-down direction. The bevel gear is mounted on the intermediate shaft coaxially, and can rotate integrally with the intermediate shaft 41 about the rotation axis of the intermediate shaft. The bevel gear is located at a lower side of the motor shaft, and meshes with the pinion. Thus, the bevel gear rotates together with the intermediate shaft as the motor performs a driving action. The crank plate is a plate-like component which extends forwards, rearwards, leftwards and rightwards and has a disc shape when viewed from above, is configured so as to be coaxial with the intermediate shaft, and is fixed at an upper side of the intermediate shaft. Thus, the crank plate can rotate integrally with the intermediate shaft about the rotation axis. The crank plate has an eccentric pin. The eccentric pin is fixed to the crank plate at a position eccentric with respect to the rotation axis, and protrudes upwards from an upper surface of the crank plate. In the simplified schematic drawings as shown in Figs. 4-8, the intermediate shaft, the crank plate, and eccentric pin are omitted. Nevertheless, it can be understood that the technical solution of the present invention could work with the reciprocating saws having the components that are not shown in the Figs. 4-8, too.

As stated above, although exemplary embodiments of the present invention have been explained herein with reference to the drawings, the present invention is not limited to the specific embodiments described above, and may have many other embodiments.

The scope of the present invention should be defined by the claims and their equivalent meaning.

## Claims

1. Reciprocating saw (1), having a housing (11), a motor (3), a slider (5), a support body (13), a reciprocation conversion mechanism (4) and an orbital mechanism (6), wherein the support body (13) is supported on the housing (11) , and when a direction of extension of the slider (5) is a front-rear direction, the reciprocation conversion mechanism (4) converts rotation of the motor to reciprocation of the slider (5) in the front-rear direction; the slider (5) is supported by the support body (13) and is able to reciprocate linearly in the support body (13), and a front end of the slider (5) has a saw blade mounting part (53 ) for mounting a saw blade (2); as the slider (5) reciprocates linearly in the support body (13), the orbital mechanism (6) causes the saw blade mounting part (53) to move back and forth on different paths; **characterized in that** the orbital mechanism (6) comprises a cam part (61) which is able to contact the support body (13) directly or indirectly in the up-down direction; and an elastic component (7) is provided to create an action force on the slider (5) in the up-down direction during the contact.

2. Reciprocating saw (1) according to Claim 1, **characterized in that** the support body (13) is an elongated component substantially extending in the front-rear direction, a first bearing (131) and a second bearing (132) arranged coaxially are respectively fixed at front and rear ends thereof, the slider (5) is inserted coaxially through the first bearing (131) and the second bearing (132), an outer ring of the second bearing (132) is disposed above the cam part (61); and the reciprocation conversion mechanism (4) comprises a disc-shaped bevel gear (40) and an eccentric pin in the up-down direction connected to the slider (5) , the cam part (61) is configured to be annular or arc-shaped on an upper surface or lower surface of the bevel gear (40) when viewed from above or below, and the thickness of the cam part (61) in the up-down direction varies in the circumferential direction.

3. Reciprocating saw (1) according to Claim 2, **characterized in that** the elastic component (7) is disposed between the outer ring of the second bearing (132) and the cam part (61).

4. Reciprocating saw (1) according to Claim 2, **characterized in that** the elastic component (7) is disposed between an inner ring of the second bearing (132) and the support body (13).

5. Reciprocating saw (1) according to Claim 2, **characterized in that** the cam part (61) is at least partly formed of an elastic material, being configured to be the elastic component (7).

6. Reciprocating saw (1) according to Claim 2, **characterized in that** the elastic component (7) is disposed between bevel gear (40) and the housing (11).

7. Reciprocating saw (1) according to Claim 1, **characterized in that** the support body (13) is an elongated component substantially extending in the front-rear direction, a pair of rolling bearings (134) is disposed at a front end thereof, an opening for accommodating the slider (5) is provided at a rear end, and the front end of the slider (5) passes between the pair of rolling bearings (134).

8. Reciprocating saw (1) according to Claim 7, **characterized in that** the reciprocation conversion mechanism (4) comprises a disc-shaped bevel gear (40) extending forwards, rearwards, upwards and downwards; the cam part (61) is configured to be annular or disc-shaped on a left surface or right surface of the bevel gear (40) when viewed from the left or right, and is disposed on the bevel gear (40) eccentrically, a bushing ring (63) is provided on a peripheral edge of the cam part (61), and a rear end of the support body (13) is connected to the bushing ring (63) by means of a control rod (64).

9. Reciprocating saw (1) according to Claim 8, **characterized in that** an elastic component (7) is provided between the control rod (64) and the bushing ring (63).

10. Reciprocating saw (1) according to Claim 8, **characterized in that** the control rod (64) is at least partially formed of an elastic material, being configured to the elastic component (7).

11. Reciprocating saw (1) according to Claim 8, **characterized in that** the bushing ring (63) is at least partially formed of an elastic material, being configured to the elastic component (7).

12. Reciprocating saw (1) according to Claim 10 or 11, **characterized in that** an upper part of the bushing ring (63) is provided with an interface (65), and an end (66) of the control rod (64) is received in the interface (65).

13. Reciprocating saw (1) according to any one of Claims 1 - 10, **characterized in that** the elastic component (7) may be a spring, a rubber, or a synthetic resin having elasticity.
